(19) Europäisches Patentamt / European Patent Office / Office européen des brevets

(11) **EP 2 316 730 B1**

(12) **FASCICULE DE BREVET EUROPEEN**

(45) Date de publication et mention
de la délivrance du brevet:
**04.01.2012 Bulletin 2012/01**

(51) Int Cl.:
**B64C 27/00** *(2006.01)*    **B64D 11/06** *(2006.01)*
**F16F 7/116** *(2006.01)*

(21) Numéro de dépôt: **10013630.8**

(22) Date de dépôt: **14.10.2010**

(54) **Mécanisme de filtration des vibrations subies par un équipement d'un appareil volant en mouvement, un giravion notamment**

Vorrichtung zum Filtern der Vibrationen die von einem Flugzeug, insbesondere einem Helikopter, an ein Gerät übertragen werden

Device for filtering the vibrations transmitted by an aircraft, especially by a helicopter, to an onboard equipment

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.10.2009 FR 0905180**

(43) Date de publication de la demande:
**04.05.2011 Bulletin 2011/18**

(73) Titulaire: **EUROCOPTER**
**13725 Marignane Cédex (FR)**

(72) Inventeurs:
• **Manfredotti, Thomas**
  **06480 La Colle sur Loup (FR)**
• **Cranga, Paul**
  **13004 Marseille (FR)**

(74) Mandataire: **GPI & Associés**
**Europarc de Pichaury**
**Bât B2.9 - 1er Et.**
**1330, rue Guillibert de la Lauzière**
**13856 Aix en Provence Cedex 3 (FR)**

(56) Documents cités:
**EP-A2- 1 719 700    US-A- 4 088 042**
**US-A- 4 311 213**

**Description**

La présente invention est du domaine des équipements pour véhicule, notamment pour appareils volants tels que giravions ou analogues, et relève plus spécifiquement du montage sur le véhicule de tels équipements, sièges plus particulièrement. Elle a pour objet un mécanisme apte à préserver ces équipements des vibrations générées lors de la progression du véhicule. La présente invention a aussi pour objet un équipement pour appareil volant, siège notamment, structurellement apte à être préservé des dites vibrations par l'intermédiaire d'un tel mécanisme.

Dans le domaine des transports, il est connu qu'un véhicule motorisé en déplacement est soumis à des vibrations. Plus particulièrement en ce qui concerne les appareils volants, tels que les giravions ou appareils volants analogues, les vibrations générées par le véhicule en déplacement sont particulièrement importantes et de fréquences élevées. A titre indicatif, les fréquences générées sont de l'ordre comprises entre 10 Hz et 25 Hz, pour une faible amplitude au regard des mouvements globalement provoqués sous l'effet du déplacement en lui-même de l'appareil.

De telles vibrations sont transmises aux équipements installés sur l'appareil et sont néfastes. Par exemple, une transmission de ces vibrations aux sièges installés dans l'habitacle de l'appareil induit un inconfort pour les passagers qui les subissent. Les sièges intègrent couramment des moyens de suspension qui sont destinés à amortir les mouvements de large amplitude globalement provoqués sous l'effet du déplacement de l'appareil, mais de tels moyens de suspension sont inadaptés pour filtrer les dites vibrations de faible amplitude et de fréquences élevées. Par exemple encore, d'autres équipements du véhicule sont susceptibles d'être sensibles aux vibrations au risque d'altérer leur fonctionnement, et/ou de devoir être protégés de ces vibrations pour des raisons de sécurité. Par exemple encore, les vibrations transmises aux équipements sont susceptibles d'induire des nuisances sonores. D'une manière générale, il est utile, voire indispensable, de rompre une liaison rigide entre un châssis ou le fuselage d'un appareil volant, et un équipement de cet appareil pour éviter une transmission des dites vibrations entre eux.

Pour établir un repérage utile à la compréhension de l'art antérieur et de la présente invention, il est à considérer les directions et orientations suivantes, par exemple au regard de la position d'installation d'un siège dans l'habitacle de l'appareil et du passager installé dans le siège. Une transposition de ces directions et orientations peut être aisément réalisée pour tout autre équipement, au regard des vibrations à filtrer en correspondance avec ces directions et orientations :

*) une direction transversale selon un axe Y correspond à une orientation autour de laquelle l'équipement est à préserver des vibrations en tangage. Pour un siège par exemple, cette direction s'étend entre la droite et la gauche du passager.

*) une direction longitudinale selon un axe X correspond à une orientation autour de laquelle l'équipement est à préserver des vibrations en roulis. Pour un siège par exemple, cette direction s'étend entre l'avant et l'arrière du passager.

*) le glissement correspond à un déplacement de l'équipement dans le plan XY. Ce plan correspond au plan de soutien de l'équipement sur l'appareil.

*) une direction en hauteur selon un axe Z correspond à une orientation suivant laquelle l'équipement est à préserver des vibrations en pompage. Cette orientation s'étend orthogonalement au plan XY.

Il a été proposé des solutions consistant dans leur généralité à interposer entre l'équipement et le fuselage de l'appareil des moyens déformables. A partir de leur résistance à la déformation, l'élasticité de ces moyens déformables est exploitée pour absorber les mouvements relatifs de fréquences élevées et de faibles amplitudes entre le fuselage et l'équipement. Plus particulièrement, la souplesse des moyens déformables est mise à profit pour filtrer de tels mouvements relatifs.

Une solution connue consiste à interposer les moyens déformables entre l'équipement et un châssis porteur solidaire du fuselage, de sorte que leur élasticité absorbe les vibrations à partir de leur déformation directement provoquée par les dits mouvements relatifs entre le châssis et l'équipement.

Le document FR2863966 décrit un siège muni de tels moyens élastiques. Une telle solution présente l'avantage d'être peu couteuse, peu encombrante et de permettre son intégration aisée dans l'équipement, siège notamment. Cependant, l'exploitation exclusive de l'élasticité des moyens déformables n'est pas pleinement satisfaisante au regard de la filtration devant être procurée pour absorber en quasi totalité les vibrations en provenance du fuselage de l'appareil, y compris pour un quelconque équipement dont le poids est susceptible de varier, tel que pour un siège susceptible de recevoir des passagers de poids différents et respectifs.

Une autre solution connue, plus complexe, consiste à interposer entre l'équipement et le fuselage de l'appareil un mécanisme associant des moyens déformables et un bras de levier lesté. Le bras de levier autorise des déplacements relatifs entre l'équipement et le fuselage, et les moyens déformables absorbent les mouvements du bras de levier dont l'effort est amplifié par son lest. Un tel mécanisme est en conséquence apte à filtrer les vibrations auxquelles le fuselage est soumis pour éviter leur transmission à l'équipement.

Le document EP1719700 décrit un dispositif de support d'une batterie de giravion. La raideur de ressorts est choisie pour que les fréquences de résonance de la suspension recevant la batterie soient de 20 Hz environ à 30 Hz environ. Un ou plusieurs supports sont solidaires du giravion pour que la batterie repose sur le dispositif intercalé entre le support et la batterie. La hauteur du dispositif est inférieure à celle de la batterie afin d'en limiter l'encombrement. Les ressorts comportent plusieurs lames élastiquement déformables, et des moyens de réglage de raideur modifient la longueur de leur partie active, avec une butée déplaçable entre une première position et une seconde position. Certains ressorts à lames se déforment en torsion sous l'effet du poids de la batterie et d'autres se déforment en flexion sous l'effet du poids de la batterie.

Le document US4311213 décrit un mécanisme apte à filtrer les vibrations auxquelles est soumis un giravion, et notamment les sièges dont il est équipé. Ce mécanisme est organisé en un réseau d'organes de liaison, qui sont chacun interposés entre le fuselage du giravion et une plateforme suspendue porteuse de sièges. Ces organes de liaison sont orientés sensiblement suivant les directions croisées, et en prise articulée sur le fuselage et en étant porteur de la plateforme par l'intermédiaire des moyens élastiques pour sa suspension. Deux organes de liaison sont reliés l'un à l'autre par un arbre de torsion. Chaque organe de liaison comprend un organe déformable qui est interposé entre la plateforme et le fuselage, et un bras de levier de manoeuvre de l'organe déformable porteur d'une masse formant lest. La masse est portée par le bras de levier à son extrémité libre opposée à celle d'ancrage au fuselage. L'arbre de torsion est en prise sur des paliers d'articulation par l'intermédiaire desquels les bras de levier des organes de liaison correspondants sont articulés sur le fuselage à leur extrémité d'ancrage. Bien qu'il permette une filtration efficace, ce mécanisme est complexe, couteux, encombrant et nécessite un aménagement ainsi qu'une organisation spécifiques du réseau d'organes de liaison selon l'implantation. L'agencement du réseau d'organes de liaison et les modalités prévues pour leur interposition doivent être spécifiquement déterminés.

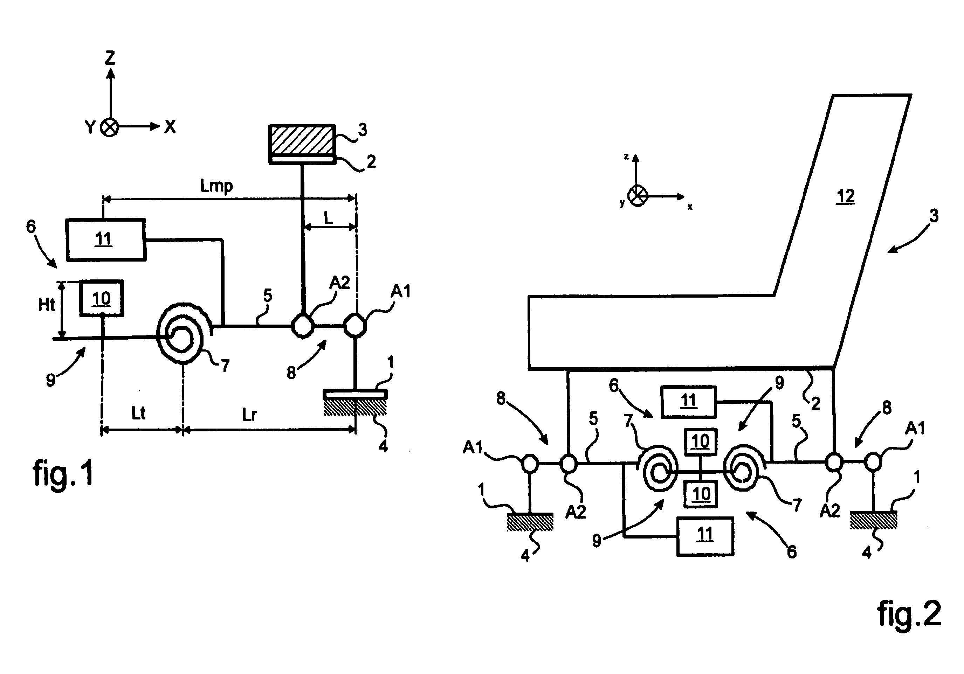

Le document US4088042 décrit un système d'isolation de vibrations compact, de type nodal, filtrant de multiples fréquences et adapté à un hélicoptère. Sur la figure 2, on voit que le système forme une croix à quatre branches, avec quatre amortisseurs en extrémités des branches.

Le but de la présente invention est de proposer un mécanisme de filtration des vibrations subies par un équipement d'un appareil volant en déplacement, giravion notamment. De telles vibrations sont de fréquences élevées et de faibles amplitudes, et sont générées par la progression de l'appareil en étant transmises à l'équipement par le fuselage de l'appareil. Il est plus spécifiquement visé par la présente invention de proposer un tel mécanisme qui prenne en compte les contraintes, les problèmes à résoudre et les difficultés à surmonter qui ont été énoncés. La structure de ce mécanisme est plus particulièrement recherchée de manière à offrir un compromis entre compacité, simplicité de structure et d'installation sur l'appareil, et efficacité au regard des vibrations à filtrer suivant les différentes orientations et mouvements cités, notamment en tangage, en pompage et en glissement, voire aussi en roulis.

A cet effet, la présente invention est définie par les revendications.

Ce mécanisme de filtration de vibrations est prévu pour un équipement d'un appareil volant, giravion notamment. Un tel mécanisme est organisé pour rompre la rigidité entre le fuselage de l'appareil et l'équipement à préserver des vibrations, en interposant entre eux au moins un organe de filtration des efforts périodiques de faibles amplitudes et de fréquences élevées supportés par le fuselage de l'appareil lors de sa progression. Cet organe de filtration est du type associant un levier lesté et des moyens déformables qui s'opposent à la transmission vers l'équipement des efforts générés par les dites vibrations.

Ce mécanisme comprend au moins un couple d'organes de filtration similaires, disposés tête bêche.

Le mécanisme comprend au moins un tel organe de filtration qui est apte à être interposé entre une première structure reliée à un fuselage de l'appareil et une deuxième structure reliée à l'équipement à préserver des vibrations. L'organe de filtration est apte à autoriser un déplacement relatif entre la première structure et l'équipement relié à la première structure.

Chaque bras de levier est articulé sur des paliers respectivement affectés à la première structure et à la deuxième structure. La filtration des vibrations est réalisée à partir d'une mise en coopération entre la masse de lestage du bras de levier amplifiant les efforts auxquels il est soumis, et les moyens déformables dont l'élasticité s'oppose à la transmission de ces efforts depuis la première structure vers la deuxième structure.

Dans sa généralité, la structure du mécanisme de la présente invention comprend au moins un organe de filtration qui est muni de moyens de mise en interposition entre une première structure reliée à un fuselage de l'appareil et une deuxième structure reliée à l'équipement, notamment par l'intermédiaire d'organes de solidarisation qui leurs sont dédiés. Cet organe de filtration comprend au moins un bras de levier :

\*) qui est lesté à l'une de ses extrémités, dite libre, par une masse globale. Le bras de levier lesté est un organe d'amplification des efforts en provenance de la première structure vers la deuxième structure.

*) qui est articulé sur des paliers à son autre extrémité, dite d'ancrage, opposée à son extrémité libre. Ces paliers sont respectivement affectés à l'une et l'autre de la première structure et de la deuxième structure, en étant notamment portés par les moyens de mise en interposition de l'organe de filtration entre ces structures. Plus spécifiquement, les paliers sont respectivement portés par les dits organes de solidarisation que comprennent les moyens de mise en interposition et qui sont respectivement affectés à la première structure et à la deuxième structure.

*) qui est en relation avec des moyens déformables s'opposant à la manoeuvre en pivotement du bras de levier sur les dits paliers. L'opposition procurée par les moyens déformables permet d'absorber les efforts en provenance de la première structure qui sont amplifiés et transmis par le bras de levier lesté. Les efforts transmis aux moyens déformables ont pour effet de mettre ce bras de levier sous contrainte pour faire obstacle à la transmission des vibrations entre la première structure et la deuxième structure, et finalement pour absorber ces vibrations susceptibles d'être transmises par le fuselage de l'appareil vers l'équipement à préserver au moyen du mécanisme.

Selon la présente invention, le bras de levier est agencé en arceau monobloc qui comprend un couple de branches qui sont reliées entre elles par une poutre de contreventement. Les branches sont individuellement articulées sur des dits paliers respectivement affectés à l'une et l'autre des structures, autour d'axes de pivot parallèles et distants. L'arceau est porteur d'un arbre de torsion, qui s'étend entre les branches à leur extrémité libre.

On comprendra par extrémité libre des branches et de l'arceau leur extrémité correspondant à l'extrémité libre du bras de levier porteuse de la masse globale de lestage, et par extrémité d'ancrage des branches et de l'arceau leur extrémité opposée correspondant à l'extrémité d'ancrage du bras de levier par l'intermédiaire de laquelle celui-ci est articulé en pivotement sur les paliers respectivement affectés à la première structure et à la deuxième structure.

Plus particulièrement, l'organe de filtration comprend le bras de levier lesté qui est subdivisé en deux branches solidaires l'une de l'autre par l'intermédiaire de la poutre ou de tout autre organe analogue de contreventement des branches entre elles. De préférence, la poutre est placée aux extrémités libres des branches, entre lesquelles elle s'étend. Les branches sont plus particulièrement orientées parallèlement suivant ladite orientation X autour de laquelle la mobilité correspondante est le roulis, en étant distantes l'une de l'autre suivant ladite orientation Y autour de laquelle la mobilité correspondante est le tangage. A titre d'exemple pour une application du mécanisme à un siège, les branches sont orientées parallèlement suivant une orientation X longitudinale du siège en étant distantes l'une de l'autre suivant une orientation Y transversale du siège. Les dites branches sont chacune articulées sur les paliers à leur extrémité d'ancrage autour d'axes de pivot respectifs qui sont distants et parallèles. Les axes de pivots s'étendent notamment parallèlement suivant l'orientation Y et sont distants l'un de l'autre suivant l'orientation X. Les branches sont conjointement porteuses à leur extrémité libre de l'arbre de torsion, qui est apte à faire office de lest pour le bras de levier et qui constitue principalement les moyens déformables. Par exemple, pour renforcer le lestage de l'arceau et pour filtrer les vibrations à la fois en pompage et en tangage, le bras de torsion est porteur d'une première masse disposée entre ses deux extrémités, et plus particulièrement dans sa zone médiane, et d'une deuxième masse subdivisée en deux masses élémentaires interposées entre les extrémités du bras de torsion et les extrémités libres correspondantes des branches. L'effort en provenance de la première structure est amplifié par l'arceau lesté, cet effort amplifié, en fréquence d'accord, étant de même amplitude et en opposition de phase avec l'effort fourni par l'arbre de torsion à l'encontre de sa déformation.

Chaque arbre de torsion participe des moyens déformables du mécanisme et au moins partiellement de la masse de lestage du bras de levier.

La structure du mécanisme, principalement constituée de l'arceau porteur de l'arbre de torsion à son extrémité libre, permet son intégration aisée dans l'équipement à préserver des vibrations. Le mécanisme est d'un encombrement ramassé apte à ne pas excéder l'encombrement au sol de l'équipement. Les axes de pivot du bras de levier étant parallèles et le bras de levier étant agencé en arceau entre les branches duquel s'étend l'arbre de torsion, les moyens d'interposition de l'organe de filtration entre les deux structures sont susceptibles d'être aisément intégrés dans l'équipement. De tels moyens d'interposition peuvent être principalement composés d'un organe de solidarisation à la première structure, formée d'un simple châssis attaché fermement au fuselage de l'appareil tel qu'un plancher, et d'un organe de solidarisation incorporé à une ossature de l'équipement, tel que des montants d'un siège conjointement porteurs d'un baquet. La jonction entre ces organes de solidarisation est réalisée directement par l'intermédiaire de l'arceau, ce qui permet de simplifier la structure du mécanisme et de permettre une installation indépendante de l'équipement intégrant le mécanisme sur une quelconque première structure attachée au fuselage de l'appareil. L'ensemble formé par les moyens d'interposition et l'arceau peuvent être logés dans un soubassement de l'équipement sans accroître outre mesure son encombrement global. Le mécanisme intégré dans l'équipement ne porte pas atteinte à la liberté de circulation dans l'appareil. Le mécanisme est composé d'un nombre limité d'organes, ce qui facilite son obtention, son montage et son intégration dans l'équipement, siège notamment. Le lestage de l'arceau est facilement obtenu à partir de l'arbre de torsion qui peut aisément intégrer des masses supplémentaires le long de son extension.

Notamment, chaque première masse est affectée à la filtration des vibrations en tangage. L'arceau constitue un organe monobloc globalement plan qui s'étend dans le dit plan de glissement XY, et une souplesse en mobilité de l'arceau dans son plan général peut être facilement obtenue pour le filtrage des vibrations en glissement. A partir d'une structure simple et aisée à obtenir, le mécanisme est apte à filtrer les vibrations à la fois en pompage, en tangage et en glissement, voire encore en roulis à partir d'une démultiplication de l'arceau suivant la dite orientation Y.

Dans une application, l'arbre de torsion (on parle aussi de bras ou de barre de torsion) est porteur d'une première masse entre ses extrémités qui sont respectivement en prise sur l'une et l'autre des branches. Cette première masse est notamment disposée dans la zone médiane de l'arbre de torsion, en étant plus particulièrement placée dans une zone correspondant sensiblement à l'aplomb du centre de gravité de l'équipement. Cette première masse est affectée à la filtration des vibrations en tangage et s'étend radialement par rapport à l'axe d'extension de l'arbre de torsion, et plus particulièrement par rapport à son diamètre général d'extension exploité en tant que dits moyens déformables.

Chaque arbre de torsion est en outre porteur d'une deuxième masse affectée à la filtration des vibrations en pompage. Chaque deuxième masse est notamment subdivisée en deux masses élémentaires, qui sont respectivement interposées entre les extrémités de l'arbre de torsion et les extrémités libres correspondantes des branches.

Plus particulièrement, la masse globale de lestage de chaque arceau est composée du bras ou arbre de torsion solidaire des extrémités libres des branches, de la première masse portée en zone médiane de l'arbre de torsion, et des deuxièmes masses élémentaires respectivement interposées entre les extrémités de l'arbre de torsion et les extrémités libres des branches. Ces dispositions sont telles que se trouvent regroupées dans un même ensemble, susceptible d'être une pièce unitaire, la première masse exploitée pour la filtration des vibrations en tangage, et la deuxième masse exploitée pour la filtration des vibrations en pompage.

Chaque bras ou arbre de torsion, la première masse et la deuxième masse forment un ensemble monobloc, qui est susceptible d'être facilement obtenu par moulage ou par forgeage d'un matériau métallique, acier ou titane notamment. Il est aussi possible de former l'arbre de torsion à partir d'un matériau métallique propre à une déformation souhaitée de l'arbre de torsion, et d'adjoindre les masses sur l'arbre de torsion, par exemple par scellement, tel que collage, soudage ou autre technique analogue. Selon cette variante, les masses sont susceptibles d'être formées à partir d'un matériau distinct de celui à partir duquel l'arbre de torsion est principalement formé.

Selon une forme de réalisation, les moyens de mise en interposition dont est muni l'organe de filtration comprennent un couple d'organes de solidarisation respectivement à la première structure et à la deuxième structure. L'arceau est logé entre et est articulé sur ces couples d'organes de solidarisation, qui sont notamment disposés latéralement à l'équipement à préserver des vibrations et à distance l'un de l'autre. Plus particulièrement, les organes de solidarisation sont des organes allongés s'étendant suivant l'orientation X, en étant distants l'un de l'autre suivant l'orientation Y.

Par exemple, chaque couple d'organes de solidarisation comprend un longeron de fixation de l'organe de filtration sur la première structure, et une semelle d'intégration de l'organe de filtration à une ossature de l'équipement à préserver des vibrations. L'extension des longerons et des semelles correspond à l'extension des branches de l'arceau, pour conforter la stabilité du montage du mécanisme sur l'équipement.

Le palier d'articulation du bras de levier affecté à la première structure est disposé en bout de son extrémité d'ancrage. Le palier d'articulation du bras de levier affecté à la deuxième structure est disposé à son extrémité opposée. Ces dispositions permettent d'accroître la compacité du mécanisme, les longerons comportant chacun un logement ouvert de réception de la semelle correspondante. L'encombrement en hauteur du mécanisme suivant l'orientation Z s'en trouve réduit, avec pour avantage de faciliter son intégration dans l'équipement à préserver des vibrations sans accroître outre mesure son encombrement global. Un soubassement de cet équipement de dimensions correspondantes en projection sur le plan XY est apte à loger le mécanisme, l'encombrement en hauteur suivant l'orientation Z de ce soubassement correspondant sensiblement à la hauteur des longerons qui logent les semelles.

Chacune des branches est agencée en cavalier. Les pattes du cavalier sont disposées de part et d'autre d'un longeron correspondant. Les semelles comportent une fenêtre de passage à leur travers de la poutre et du bras de torsion. Cette fenêtre est ouverte vers le longeron logeant la semelle correspondante, pour faciliter le montage articulé de l'arceau sur les longerons et sur les semelles. La distance de séparation des branches entre-elles est optimisée, avec pour avantage de permettre une optimisation correspondante de la longueur d'extension de l'arbre de torsion suivant l'orientation Y.

Les branches de l'arceau sont articulées par l'intermédiaire d'une masse souple sur l'un au moins des couples de paliers correspondants d'articulation de l'arceau sur les longerons et/ou sur les semelles. Les branches sont articulées par l'intermédiaire de la masse souple sur les paliers affectés à la première structure, et notamment sur les paliers portés par les longerons. Une tolérance de basculement est autorisée entre les deux structures par l'intermédiaire du pivotement de l'arceau monté souple sur les paliers. Une telle tolérance de mouvement correspond à un flottement dur de l'arceau par rapport à l'une au moins des structures, et sur les longerons par rapport à la première structure. Un tel flottement dur confère au mécanisme une aptitude à filtrer les vibrations en glissement, en autorisant un déplacement relatif correspondant des structures entre elles, sans porter atteinte à la robustesse de l'articulation des branches qui sont contreventées par la poutre, ni en conséquence sans porter atteinte à la filtration des vibrations en pompage et/ou en tangage.

Selon une forme de réalisation, le mécanisme comprend un couple d'organes de filtration similaires, qui sont interposés entre la première structure et la deuxième structure en étant disposés tête bêche. L'association et l'orientation relative entre ces deux organes de filtration permet d'optimiser la fiabilité de la filtration obtenue des vibrations, notamment en tangage et en glissement.

Les premières masses que comportent respectivement les arbres de torsion de chacun des organes de filtration du couple sont placées proches l'une de l'autre, en étant disposées sensiblement à l'aplomb du centre de gravité de l'équipement à préserver des vibrations. Ces dispositions favorisent l'équilibrage du mécanisme et la filtration des vibrations en tangage. Les dites premières masses proches sont solidaires l'une de l'autre par l'intermédiaire d'un organe de jonction. Cet organe de jonction est par exemple constitué de plaques ou organes de jonction analogues des premières masses entre elles. Ces plaques sont en prise sur chacune des premières masses respectivement affectées aux arbres de torsion de l'un et l'autre des organes de filtration du couple.

Les moyens d'interposition dont sont munis les organes de filtration associés et disposés tête-bêche leurs sont communs. Notamment, les dits organes de filtration sont montés articulés en pivotement sur les mêmes longerons et semelles.

Un équipement muni d'un mécanisme tel qu'il vient d'être décrit est reconnaissable en ce qu'il intègre structurellement le mécanisme en incorporant les dits moyens d'interposition avec lesquels il forme un ensemble unitaire. On comprendra qu'une telle intégration est à considérer au regard du fait que l'équipement peut être installé ou séparé en lui-même de l'appareil, tout en étant encore équipé du mécanisme de l'invention avec lequel il forme le dit ensemble unitaire. Ledit ensemble unitaire comprenant l'équipement et le mécanisme est apte à être rapporté en une même opération de montage sur la première structure.

Le mécanisme est placé à la base du dit ensemble unitaire. On comprendra par base la face de l'ensemble unitaire par l'intermédiaire de laquelle il est fixé sur la première structure. Plus particulièrement, ce mécanisme est logé dans un soubassement de l'équipement délimité entre des dits couples d'organes de solidarisation respectivement à la première structure et à la deuxième structure.

Selon un exemple d'application du mécanisme, l'équipement est un siège comprenant une ossature principalement composée de montants latéraux porteurs d'un baquet. Les montants incorporent chacun une semelle, avec lesquelles ils constituent un ensemble rigide monobloc. Les semelles sont reliées à un longeron respectif de fixation du siège à un plancher, par l'intermédiaire d'au moins un dit arceau conjointement articulé en pivotement sur les semelles et sur les longerons.

Plus particulièrement, un siège constituant un équipement de la présente invention est du genre comprenant une ossature composée de montants latéraux, qui sont conjointement porteurs d'un baquet. Ce baquet est porté par les montants par l'intermédiaire d'un mécanisme de libération du baquet en cas de crash de l'appareil volant à l'intérieur duquel est installé le siège. Un tel mécanisme est notamment organisé pour libérer le baquet à partir d'un seuil de contraintes auquel est soumis le siège, et pour le retenir par l'intermédiaire de moyens déformables consécutivement à cette libération. Chaque montant est en prise sur un longeron de fixation du siège sur une dite première structure de l'appareil, plancher notamment. Le longeron est pourvu de moyens de fixation à la première structure, notamment par l'intermédiaire d'organes de fixation complémentaires coopérants qui sont respectivement affectés au longeron et à la première structure. De tels organes de fixation complémentaires sont agencés en organes de coulissement, tels que glissière et rail ou organes coopérants analogues, de sorte que la position du siège sur la première structure soit ajustable selon l'orientation X.

Un siège selon la présente invention est reconnaissable en ce qu'il intègre le mécanisme de filtration des vibrations en provenance de la première structure, tel qu'il vient d'être décrit, qui est logé dans un soubassement du siège.

Plus particulièrement, les longerons sont reliés aux montants correspondants par l'intermédiaire des dites semelles et arceau au moins tel qu'il vient d'être décrit. L'arceau est articulé en pivotement sur des paliers respectivement affectés aux semelles et aux longerons par l'intermédiaire des branches qu'il comprend. L'arceau est agencé en bras de levier lesté en étant principalement constitué d'un couple des dites branches qui sont contreventées par une poutre disposée à leur extrémité libre opposée à celle d'ancrage par l'intermédiaire de laquelle l'arceau est articulé sur les semelles et les longerons autour d'axes parallèles et distants. L'arceau est porteur à son extrémité libre du dit arbre de torsion, muni des premières et deuxièmes masses. Les longerons comportent un logement ouvert de réception des semelles, et les semelles comportent une fenêtre ouverte de passage à leur travers de la poutre et de l'arbre de torsion.

La course en pivotement de l'arceau est limitée entre deux positions de butée en correspondance avec le dit seuil de contraintes à partir duquel le mécanisme de libération du baquet est mis en oeuvre. Ces dispositions sont telles que le mécanisme de filtration des vibrations intégré au siège ne fait pas obstacle à la mise en oeuvre du mécanisme dédié à la protection des passagers en cas de crash.

La course en pivotement de l'arceau est limitée entre la face interne d'un dit logement ouvert que comporte les longerons et la face interne en regard d'une dite fenêtre ouverte que comportent les semelles, contre lesquelles faces l'arceau est placé en butée, par l'intermédiaire de la poutre notamment. Un tel agencement des moyens de butée limitant la course de l'arceau est facilement intégrable dans le mécanisme de l'invention, à partir de l'association faite entre la structure préférée propre à l'arceau, qui comprend notamment des branches agencées en cavaliers, et la formation des dits logements et fenêtres que comportent respectivement les longerons et les semelles.

Des exemples de réalisation de la présente invention vont être décrits en relation avec les figures des planches annexées, dans lesquelles :

- les fig.1 et fig.2 sont des schémas illustrant des exemples respectifs de mise en oeuvre d'un mécanisme de la présente invention.

- les fig.3 et fig.4 sont des illustrations partielles en perspective respectivement de face et de dessous d'un siège intégrant un mécanisme selon une forme préférée de réalisation de l'invention.

Pour illustrer les modalités d'organisation et de fonctionnement des mécanismes représentés sur l'ensemble des figures, il sera pris en compte les orientations longitudinale X, transversale Y et de hauteur Z, ainsi que les mouvements, notamment pompage selon Z, tangage autour de Y, et glissement dans le plan XY, qui ont été précédemment définis.

Sur les fig.1 et fig.2, un mécanisme est agencé pour filtrer les vibrations induites par un appareil volant lors de sa progression, dans la zone d'un équipement à préserver de ces vibrations. De telles vibrations sont de fréquences élevées et de faibles amplitudes, au regard des mouvements provoqués par le déplacement de l'appareil en vol. Ce mécanisme est interposé entre une première structure 1 prévue pour être fermement maintenue par le fuselage 4 de l'appareil, plancher notamment, et une deuxième structure 2 solidaire de l'équipement 3. Ce mécanisme met en oeuvre un ou plusieurs bras de levier 5 chacun lestés par une masse globale de lestage 6 et articulés sur l'une et l'autre des structures 1, 2. Le ou les bras de levier 5 sont en prise sur des moyens déformables 7 qui leur sont affectés. Ces moyens déformables 7 sont aptes à durcir le basculement du ou des bras de levier 5 autour de leurs axes d'articulation A1, A2 respectifs sur les structures 1,2. Les mouvements relatifs entre les structures 1,2 qui sont induits par les vibrations en provenance de la première structure 1 sont filtrés par les moyens déformables 7 pour préserver l'équipement de ces vibrations. Les efforts transmis par la première structure 1 sont amplifiés par le ou les bras de levier lestés 5, et sont absorbés par la résistance élastique que procurent les moyens déformables 7.

Les axes d'articulation A1, A2 du ou des bras de levier 5 sur les structures 1,2 sont ménagés à leur extrémité d'ancrage 8, en étant distants l'un de l'autre et en étant orientés parallèlement suivant l'orientation Y. Le ou les bras de levier 5 sont articulés sur la première structure 1 en bout de leur extrémité d'ancrage 8, et sur la deuxième structure 2 entre les deux extrémités du bras de levier 5. La masse globale de lestage 6 et les moyens déformables 7 affectés à chacun des bras de levier 5 sont placés à l'extrémité opposée libre 9 du bras de levier 5 correspondant. La masse de lestage 6 du ou des bras de levier 5 est respectivement subdivisée en deux masses associées. Une première masse 10 directement en prise sur les moyens déformables 7 est exploitée pour la filtration des vibrations en tangage autour de l'orientation Y. Une deuxième masse 11 directement en prise à l'extrémité libre 9 du bras de levier 5 correspondant est exploitée pour la filtration des vibrations en pompage suivant l'orientation Z.

Sur la fig.1 plus particulièrement, il est défini selon le mécanisme de la présente invention illustré les caractéristiques suivantes :

Mt correspond à la masse 10 affectée à la filtration des vibrations en tangage.

Mp correspond à la masse 11 affectée à la filtration des vibrations en pompage.

L est la distance de séparation suivant X entre l'axe d'articulation A1 du bras de levier 5 sur la première structure 1 et l'axe d'articulation A2 du bras de levier 5 sur la deuxième structure 2.

Lr est la distance de séparation suivant X entre les moyens déformables 7 et la première structure 1.

Lt est la distance de séparation suivant X entre les moyens déformables 7 et la masse 10 affectée à la filtration des vibrations en tangage.

Lmp est la distance de séparation suivant X entre la première structure 1 et la masse 11 affectée à la filtration des vibrations en pompage.

Ht est la distance de séparation suivant Z entre la masse 10 affectée à la filtration des vibrations en tangage et les moyens déformables 7.

Megp est la masse équivalente de Mp résultant de la mise en oeuvre du mécanisme pour filtrer les vibrations en pompage.

$\omega_p$ est la fréquence d'accord en pompage entre la masse Meqp et la résistance offerte par les moyens déformables 7.

Meqt est la masse équivalente à Mp résultant de la mise en oeuvre du mécanisme pour filtrer les vibrations en tangage.

$\omega_t$ est la fréquence d'accord en tangage entre la masse Meqt et la résistance offerte par les moyens déformables 7.

A partir de ces caractéristiques, il est défini les valeurs correspondantes et l'agencement structurel du mécanisme de l'invention, à l'aide des relations suivantes :

$$\underline{Meqp} = \left(\frac{Lmp}{L}\right)^2 Mp + \left(\frac{Lr}{L}\right)^2 Mt$$

$$\omega_p = \sqrt{\frac{\left(\frac{K_\theta}{L^2}\right)}{Meqp}}$$

$$\underline{Meqt} = \left(\frac{Lmp}{L}\right)^2 Mp + \left(\frac{Lr}{L}\right)^2 \left(\frac{Ht}{Lt}\right)^2 Mt$$

$$\omega_t = \sqrt{\frac{\left(\frac{K_\theta}{L^2}\right)}{Meqt}}$$

Les réglages de l'accord en pompage et en tangage entre les moyens déformables 7 et les dites masses équivalentes Meqp et Meqt sont aisément réalisables selon l'application du mécanisme à un équipement spécifique et/ou selon les vibrations à filtrer. Pour régler l'accord en pompage, les masses Mt et Mp sont ajustées. Pour régler l'accord en tangage, la distance Ht est ajustée. De tels réglages peuvent être réalisés sans modification conséquente structurelle et/ou d'encombrement du mécanisme.

Le bras de levier 5 amplifie le mouvement de la masse globale 6, avec pour effet de générer un effort qui, à la fréquence d'accord, est de même amplitude et en opposition de phase avec la résistance offerte par les moyens déformables 7. Cette fréquence d'accord est indépendante du poids et/ou des réactions dynamiques propres à l'équipement 3. Le mécanisme est apte à être exploité pour préserver des vibrations un équipement 3 dont le poids est susceptible de varier, tel que pour un siège susceptible d'être utilisé par des passagers de poids respectifs différents. L'appareillage de l'équipement 3 propre à compenser les mouvements généraux de l'appareil, tels que les moyens de suspension d'un siège, peut offrir une résistance élevée à l'encontre de ces mouvements généraux, le mécanisme de filtration demeurant efficace et fiable malgré cette résistance élevée du dit appareillage.

Sur la fig.2, le mécanisme schématisé sur la fig.1 est appliqué à un équipement constitué d'un siège 12. Selon l'exemple préféré de réalisation illustré, le mécanisme comprend deux bras de levier similaires 5 qui sont disposés tête-bêche dans leur plan général en interposition entre la première structure 1 et la deuxième structure 2 respectivement solidaires du fuselage 4 et du siège 12. Sous l'effet de vibrations générées suivant l'axe Z en pompage, l'ensemble des masses 10,11 portées par chacun des bras de levier 5 oscillent verticalement en phase avec ces vibrations. Sous l'effet de vibrations générées autour de l'axe Y en tangage et/ou en glissement suivant le plan XY, les masses 11 portées par chacun des bras de levier 5 et affectées à la filtration des vibrations en pompage sont en opposition de phase par rapport aux moyens déformables 7, et les masses 10 affectées à la filtration des vibrations en tangage oscillent autour de l'axe Y.

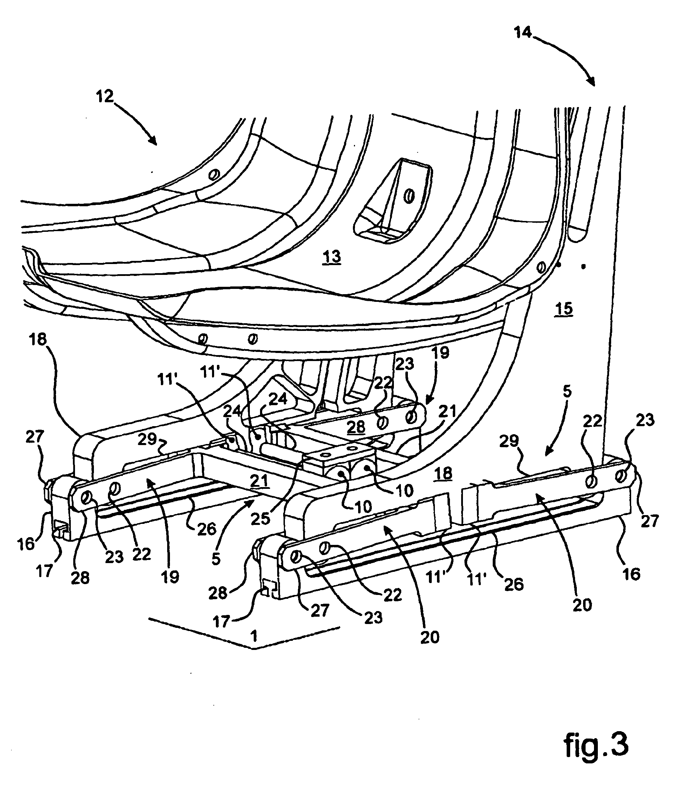

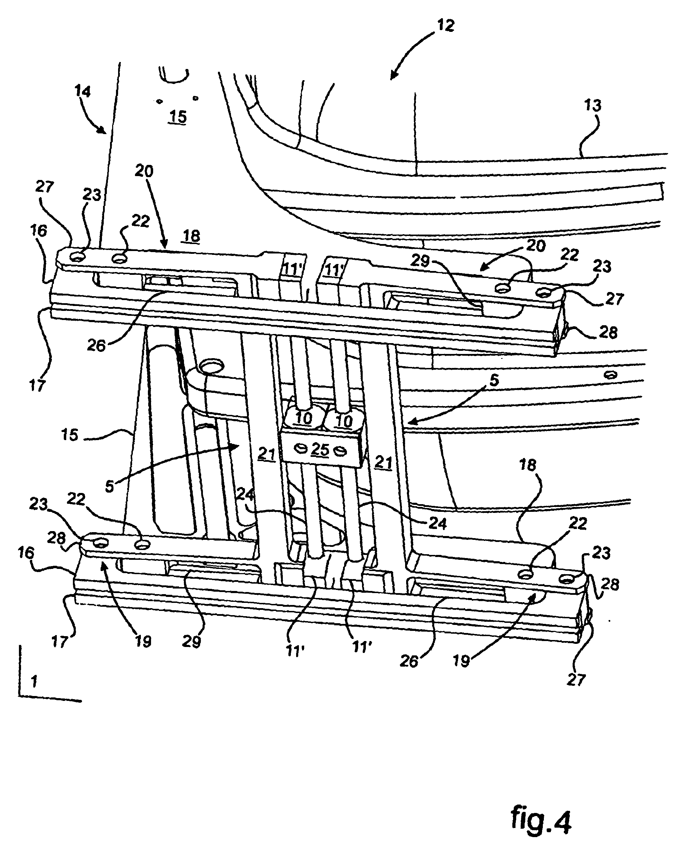

Sur les fig.3 et fig.4, un siège 12 est équipé d'un mécanisme de filtration des vibrations en provenance de la première structure 1 selon l'exemple de réalisation schématisé sur la fig.2. La première structure 1 est notamment constituée du plancher de l'appareil, qui peut être fermement fixé au fuselage de l'appareil. Le siège 12 comprend principalement un baquet 13 qui est porté par une ossature 14 comprenant un couple de montants 15 assemblés à des longerons 16 de fixation du siège 12 au plancher. Les longerons 16 comportent à cet effet des organes de fixation 17 au plancher en une position longitudinale souhaitée du siège 12. Sur l'exemple illustré, ces organes de fixation 17 sont agencés en organes de coulissement, glissières de fixation notamment, qui sont aptes à coopérer en coulissement avec des rails intégrés au plancher de l'appareil. Le siège 12 incorpore structurellement le mécanisme, de sorte que le siège 12 et le mécanisme qu'il intègre constituent un ensemble unitaire amovible apte à être monté et/ou démonté du plancher par l'intermédiaire des longerons 16. Le mécanisme de filtration est structurellement ramassé, ce qui le rend apte à être globalement logé dans le soubassement du siège 12 délimité entre les longerons 16. L'ossature 14 du siège 12 est fixée sur les longerons 16 par l'intermédiaire d'un couple de bras de levier 5 conformés en arceau et disposés tête-bêche dans leur plan général correspondant sensiblement au plan de glissement. Ces bras de levier 5 sont chacun articulés autour de leurs axes de pivotement A1 et A2 respectivement sur les longerons 16 et sur des semelles 18 correspondantes qui sont ménagées à la base de chacun des montants 15 de l'ossature 14. Les longerons 16 et les semelles 18 constituent des moyens d'interposition du mécanisme entre le plancher formant la première structure 1 et le siège 12 formant la deuxième structure 2, en étant agencés en organes de solidarisation du mécanisme sur respectivement la première structure 1 et la deuxième structure 2. La solidarisation du mécanisme sur la première structure 1 est obtenue par attachement ferme par l'intermédiaire des organes de fixation 17, et sur la deuxième structure 2 par intégration des semelles 18 aux montants 15.

Les arceaux formant les bras de levier 5 sont chacun monoblocs et composés d'un couple ou paire de branches 19,20 reliées l'une à l'autre par une poutre de contreventement 21. Les branches 19,20 sont distantes l'une de l'autre transversalement au siège 12, et sont chacune respectivement articulées à leur extrémité d'ancrage 8 sur la semelle 18 intégrée au un montant 15 correspondant, et sur un longeron 16 correspondant de fixation du siège 12 sur le plancher. Les branches 19,20 des arceaux sont chacune articulées sur les longerons 16 et sur les semelles 18 correspondantes par l'intermédiaire de paliers 22,23 qui intègrent des masses souples. De telles masses souples sont notamment déformables en rotation et suivant l'extension des axes d'articulation des branches 19,20 sur les semelles 18 et les longerons 16, de sorte qu'ils participent à la filtration des composantes latérales des vibrations par effet de découplage, et qu'ils autorisent une filtration des vibrations en glissement malgré la liaison articulée en pivotement des arceaux sur les longerons et les semelles.

Les branches 19,20 de chacun des arceaux sont reliées solidairement l'une à l'autre par la poutre 21 correspondante, qui est placée à leur extrémité libre 9 opposée à leur extrémité d'ancrage 8. Les poutres de contreventement 21 confèrent aux arceaux une rigidité dans leur plan global, ce qui permet d'éviter une rotation indésirable des branches 19,20 autour de la direction longitudinale du siège 12, et de conférer aux arceaux une rigidité en torsion suivant la direction transversale du siège 12. Les moyens déformables du mécanisme sont formés par des arbres de torsion 24 qui sont respectivement portés par chacun des arceaux. Les arbres de torsion s'étendent respectivement entre les branches 19,20 de chacun des arceaux en étant orientés parallèlement à la poutre de contreventement 21.

Les arbres de torsion 24 sont chacun porteurs d'une première masse 10 affectée à la filtration des vibrations en tangage. Ces premières masses 10 sont placées entre les extrémités des arbres de torsion 24, et plus particulièrement dans leur zone longitudinalement médiane.

La position des premières masses 10 en zone longitudinalement médiane des arbres de torsion 24 correspond sensiblement à l'axe longitudinalement médian du siège 12. Le siège 12 étant globalement symétrique par rapport au dit axe médian, l'exploitation d'un couple d'arceaux disposés tête bêche permet de disposer plus particulièrement les premières masses 10 dont ils sont respectivement porteurs sensiblement à l'aplomb du centre de gravité du siège 12. Les premières masses 10 de l'un et l'autre des arbres de torsion 24 sont reliées entre elles par l'intermédiaire d'un organe de jonction 25, tel qu'un jeu de platines sur l'exemple de réalisation illustré. Chaque arceau est porteur de l'arbre de torsion 24 qui lui est affecté par l'intermédiaire d'un couple de deuxièmes masses élémentaires 11', qui sont respectivement interposées entre les extrémités de l'arbre de torsion 24 et l'extrémité libre 9 des branches 19,20 de l'arceau correspondant.

Chacun des arbres de torsion 24 et les masses 10,11' dont ils sont porteurs constituent un ensemble monobloc, facilement réalisable par moulage ou par forgeage, et dont le montage sur le siège 12 est aisé. Les arbres de torsion 24 sont rapportés sur le mécanisme par montage suspendu à l'extrémité libre 9 des arceaux, le poids du dit ensemble monobloc 24,10,11' étant exploité pour réduire la masse globale utile du mécanisme.

Les longerons 16 comportent chacun un logement 26 de réception de la semelle 18 ménagée à la base du montant correspondant 15 et des paliers d'articulation 22 dont elles sont munies. Les branches 19,20 des arceaux sont conformées en cavalier dont les pattes 27,28 sont disposées de part et d'autre des semelles 18 et des longerons 16 correspondants.

Les semelles 18 comportent chacune une fenêtre ouverte 29 de passage des poutres de contreventement 21 et des bras ou arbre de torsion 24 à leur travers. La manoeuvre en pivotement des arceaux est limitée entre deux positions de butée, de sorte que le mécanisme ne fasse pas obstacle à la mise en oeuvre d'un mécanisme dédié à la protection des passagers en cas de crash.

Un tel mécanisme de protection est couramment un mécanisme de libération du baquet 13 au-delà d'un seuil déterminé de contraintes appliquées sur le siège 12 et/ou spécifiquement sur les longerons 16 de fixation du siège 12 sur le plancher de l'appareil. Le débattement des arceaux est autorisé dans l'espace délimité entre les faces en regard respectivement des logements 26 que comportent les longerons 16 et des fenêtres 29 que comportent les semelles 18. Ces faces en regard constituent des organes de butée contre lesquels les arceaux sont placés en appui en positions extrêmes respectives de leur course, notamment par l'intermédiaire de la poutre 21 qu'ils incorporent.

**Revendications**

1. Mécanisme de filtration de vibrations pour équipement d'un appareil volant, ce mécanisme comprenant au moins un organe de filtration muni de moyens de mise en interposition (16,18) entre une première structure (1) reliée à un fuselage (4) de l'appareil et une deuxième structure (2) reliée à l'équipement (3), cet organe de filtration comprenant au moins un bras de levier (5) qui est lesté à son extrémité libre (9) par une masse globale (6), qui est articulé à son extrémité opposée d'ancrage (8) sur des paliers (22,23) respectivement affectés à l'une et l'autre des dites structures (1,2), et qui est en relation avec des moyens déformables (7) s'opposant à sa manoeuvre en pivotement sur les dits paliers (22,23), ledit mécanisme de filtration comprenant au moins un couple d'organes de filtration similaires disposés tête bêche ; chaque bras de levier (5) étant agencé en arceau monobloc qui comprend un couple de branches (19,20) reliées entre elles par une poutre de contreventement (21) et individuellement articulées sur lesdits paliers (22,23) autour d'axes de pivot (A1,A2) parallèles et distants ; un arbre de torsion étant étendu entre les branches (19,20) à leur extrémité libre (9) et chaque arbre de torsion définissant des extrémités ; **caractérisé en ce que** chaque arbre de torsion (24) est porteur entre ses extrémités d'une première masse (10) ; chaque première masse (10), qui est disposée dans une zone médiane de son arbre de torsion (24), est affectée à la filtration des vibrations en tangage ; les premières masses (10) qui comportent respectivement les arbres de torsion (24) de chacun des organes de filtration du couple sont solidaires l'une de l'autre par l'intermédiaire d'un organe de jonction (25) ; une course en rotation des bras de leviers (5) formant arceau est limitée par ladite poutre de contreventement (21).

2. Mécanisme selon la revendication 1,
   **caractérisé en ce que** chaque arbre de torsion (24) participe des moyens déformables (7) du mécanisme et au moins partiellement de la masse globale de lestage (6) du bras de levier (5).

3. Mécanisme selon l'une des revendications 1 ou 2,
   **caractérisé en ce que** chaque arbre de torsion (24) est porteur d'une deuxième masse (11) affectée à la filtration des vibrations en pompage, cette deuxième masse (11) étant subdivisée en deux masses élémentaires (11') qui sont respectivement interposées entre les extrémités de cet arbre de torsion (24) et les extrémités libres correspondantes (9) des branches (19,20).

4. Mécanisme selon l'une des revendications 1 à 3,
   **caractérisé en ce que** chaque levier (5) formant arceau monobloc possède une masse globale de lestage (6) qui comporte l'arbre de torsion (24), la première masse (10) et deux masses élémentaires (11') respectifs.

5. Mécanisme selon l'une des revendications 1 à 4,
   **caractérisé en ce que** les dits moyens de mise en interposition comprennent un couple d'organes de solidarisation (16,18) respectivement à la première structure (1) et à la deuxième structure (2), chaque levier (5) formant arceau monobloc étant logé entre et articulé sur ces couples d'organes de solidarisation (16,18) ; chaque couple d'organes de solidarisation comprenant : un longeron (16) de fixation sur la première structure (1) et une semelle (18) d'intégration à une ossature (14) de l'équipement (12).

6. Mécanisme selon l'une quelconque des revendications 1 à 4,
   **caractérisé en ce que** le palier d'articulation (23) de chaque bras de levier (5) affecté à la première structure (1) est disposé en bout de son extrémité d'ancrage (8) et **en ce que** le palier d'articulation (22) du bras de levier (5) affecté à la deuxième structure (2) est disposé entre ses extrémités opposées.

**7.** Mécanisme selon la revendication 5 ou 6,
**caractérisé en ce que** les longerons (16) comportent chacun un logement ouvert (26) de réception de la semelle (18) correspondante.

**8.** Mécanisme selon la revendication 7,
**caractérisé en ce que** chacune des branches (19,20) est agencée en cavalier dont les pattes (27,28) sont disposées de part et d'autre du longeron (16) correspondant, et **en ce que** les semelles (18) comportent chacune une fenêtre (29) de passage à leur travers de la poutre (21) et de l'arbre de torsion (24).

**9.** Mécanisme selon l'une des revendications 1 à 8,
**caractérisé en ce que** les premières masses (10) qui comportent respectivement les arbres de torsion (24) de chacun des organes de filtration du couple sont solidaires l'une de l'autre par l'intermédiaire d'un organe de jonction (25) ; et les moyens d'interposition (16,18) dont sont munis les organes de filtration disposés tête-bêche leurs sont communs.

**10.** Siège (12) constituant un équipement pourvu d'au moins un mécanisme selon l'une des revendications 1 à 9,
**caractérisé en ce que** le siège (12) comporte des montants (15) porteurs d'un baquet (13) qui incorporent chacun une semelle (18) faisant partie de moyens de mise en interposition, les semelles (18) étant reliées à un longeron (16), lui aussi faisant partie de moyens de mise en interposition ; ce longeron (16) étant respectif pour la fixation du siège (18) à un plancher (1) par l'intermédiaire d'au moins deux leviers (5) formant arceaux monoblocs, chacun conjointement articulé en pivotement sur l'une des semelles (18) et sur l'un des longerons (16).

**11.** Siège (12) selon la revendication 10,
**caractérisé en ce qu'**il comporte un baquet, et une course en pivotement de chaque levier (5) formant arceau monobloc est limitée entre deux positions de butée en correspondance avec un seuil de contraintes auquel est soumis le siège (12) à partir duquel un mécanisme de libération du baquet (13) est mis en oeuvre.

**12.** Siège selon la revendication 11,
**caractérisé en ce que** la course en pivotement de chaque bras de levier (5) formant arceau monobloc est limitée entre la face interne d'un logement ouvert (26) que comportent les longerons (16) et la face interne en regard d'une fenêtre ouverte (29) que comportent les semelles (18), contre lesquelles faces chaque bras de levier (5) formant arceau monobloc est respectivement placé en butée par l'intermédiaire ladite poutre de contreventement (21).

**Claims**

**1.** Vibration filter mechanism for aircraft equipment, this mechanism comprising at least one filter member provided with interposition means (16,18) between a first structure (1) connected to a fuselage (4) of the aircraft and a second structure (2) connected to the equipment (3), this filter member comprising at least one lever arm (5) that is weighted at its free end (9) by an overall weight (6) and is hinged at its opposite, anchor end (8) to bearings (22,23) respectively assigned to one and the other of the said structures (1,2) and cooperates with deformable means (7) for opposing its pivoting movement on the said bearings (22,23), the said filter mechanism comprising at least one pair of similar filter members placed head to head; each lever arm (5) being arranged as a one-piece arch comprising a pair of legs (19,20) interconnected by a crossbar (21) and individually hinged to the said bearings (22,23) about spaced-apart parallel pivot axes (A1,A2); a torsion shaft extending between the legs (19,20) at their free end (9) and each torsion shaft defining ends;
**characterised in that** each torsion shaft (24) carries between its ends a first weight (10); each first weight (10), which is placed in a middle zone of its torsion shaft (24), is assigned to filtering pitching vibrations; the first weights (10), which respectively include the torsion shafts (24) of each of the filter members of the pair, are secured to each other by means of a junction member (25); and a rotary stroke of the arch-forming lever arms (5) is limited by the said crossbar (21).

**2.** Mechanism according to Claim 1,
**characterised in that** each torsion shaft (24) participates in the deformable means (7) of the mechanism and at least in part in the overall weighting weight (6) of the lever arm (5).

**3.** Mechanism according to one of Claims 1 and 2,
**characterised in that** each torsion shaft (24) carries a second weight (11) assigned to filtering pumping vibrations, this second weight (11) being subdivided into two individual weights (11') which are interposed respectively between the ends of this torsion shaft (24) and the corresponding free ends (9) of the legs (19,20).

**4.** Mechanism according to one of Claims 1 to 3,
**characterised in that** each one-piece arch-forming lever (5) possesses an overall weighting weight (6) which includes the torsion shaft (24), the first weight (10), and two individual weights (11'), respectively.

**5.** Mechanism according to one of Claims 1 to 4,
**characterised in that** the said interposition means comprise a pair of fastener members (16,18) for fastening respectively to the first structure (1) and to the second structure (2), each one-piece arch-forming lever (5) being accommodated between these pairs of fastener members (16,18) and being hinged thereto; each pair of fastener members comprising: a longitudinal member (16) for fastening to the first structure (1) and a sole (18) for incorporating in a frame (14) of the equipment (12).

**6.** Mechanism according to any one of Claims 1 to 4,
**characterised in that** the hinge bearing (23) of each lever arm (5) assigned to the first structure (1) is positioned at the end of its anchoring end (8), and **in that** the hinge bearing (22) of the lever arm (5) assigned to the second structure (2) is positioned between its opposite ends.

**7.** Mechanism according to Claim 5 or 6,
**characterised in that** the longitudinal members (16) each include an open housing (26) for receiving the corresponding sole (18).

**8.** Mechanism according to Claim 7,
**characterised in that** each of the legs (19,20) is arranged as a fork, the branches (27,28) of which are positioned on either side of the corresponding longitudinal member (16), and **in that** the soles (18) each include a window (29) for passing the crossbar (21) and the torsion shaft (24) therethrough.

**9.** Mechanism according to one of Claims 1 to 8,
**characterised in that** the first weights (10) which respectively comprise the torsion shafts (24) of each of the filter members of the pair are secured to each other by means of a junction member (25); and the interposition means (16,18) with which are equipped the filter members placed head to head are common thereto.

**10.** Seat (12) constituting equipment provided with at least one mechanism according to one of Claims 1 to 9,
**characterised in that** the seat (12) includes uprights (15) carrying a bucket (13), each upright incorporating a sole (18) forming part of interposition means, the soles (18) being connected to a longitudinal member (16), also forming part of interposition means; this longitudinal member (16) serving respectively to fasten the seat (18) to a floor (1) via at least two one-piece arch-forming levers (5), each jointly hinged to pivot on one of the soles (18) and on one of the longitudinal members (16).

**11.** Seat (12) according to Claim 10,
**characterised in that** it includes a bucket, and a pivoting stroke of each one-piece arch-forming lever (5) is limited between two abutment positions corresponding to a stress threshold to which the seat (12) is subjected, at which a mechanism for releasing the bucket (13) comes into operation.

**12.** Seat according to Claim 11,
**characterised in that** the pivoting stroke of each one-piece arch-forming lever arm (5) is limited between the inside face of an open housing (26) included in the longitudinal members (16) and the inside face facing an open window (29) included in the soles (18), against which faces each one-piece arch-forming lever arm (5) is placed respectively in abutment by means of the said crossbar (21).

**Patentansprüche**

**1.** Mechanismus zum Filtern von Vibrationen für die Ausrüstung eines Flugzeugs, mit mindestens einem Filterorgan, welches mit Mitteln zum Einfügen (16, 18) zwischen einem ersten Aufbau (1), der mit dem Rumpf (4) des Flugzeugs verbunden ist, und einem zweiten Aufbau (2), der mit der Ausrüstung (3) verbunden ist, versehen ist, wobei dieses Filterorgan mindestens einen Hebelarm (5) aufweist, der an seinem freien Ende (9) mit einer Gesamtmasse (6) beschwert ist, und der an seinem gegenüberliegenden Verankerungsende (8) an Lagern (22, 23) angelenkt ist, die jeweils dem einen und dem anderen Aufbau (1, 2) zugeordnet sind, und der mit verformbaren Mitteln (7) in Beziehung steht, die sich seiner Schwenkbetätigung auf den Lagern (22, 23) entgegenstellen, wobei der Filtermechanismus mindestens ein Paar ähnlicher Filterorgane aufweist, die entgegengesetzt zueinander angeordnet sind, wobei jeder Hebelarm (5) als einstückiger Bogen ausgeführt ist, der ein Paar von Armen (19, 20) aufweist, die untereinander durch einen Querverbindungsträger (21) verbunden und einzeln an den Lagern (22, 23) um zueinander parallele und voneinander beabstandete Schwenkachsen (A1, A2) angelenkt sind, wobei sich eine Torsionswelle zwischen den Armen (19, 20) an deren freiem Ende (9) erstreckt und jede der Torsionswellen die Enden definiert, **dadurch gekennzeichnet, dass** jede Torsionswelle (24) zwischen ihren Enden eine erste Masse (10) trägt, wobei jede erste Masse (10), die in einem Mittenbereich ihrer Torsionswelle (24) angeordnet ist, der Filtration von Nickschwingungen dient, wobei die ersten Massen (10), die jeweils die Torsionswellen (24) eines jeden Filterorgans des Paares aufweisen, über ein Verbindungsorgan (25) miteinander fest verbunden sind, wobei der Schwenkbereich der bogenförmigen Hebelarme (5) durch den Querverbindungsträger (21) begrenzt ist.

2. Mechanismus nach Anspruch 1,
**dadurch gekennzeichnet, dass** jede Torsionswelle (24) zu den verformbaren Mitteln (7) des Mechanismus gehört sowie zumindest teilweise auch die Gesamtballastmasse (6) des Hebelarms (5).

3. Mechanismus nach einem der Ansprüche 1 oder 2,
**dadurch gekennzeichnet, dass** jede Torsionswelle (24) eine zweite Masse (11) trägt, die zur Filtration von Pumpvibrationen dient, wobei diese zweite Masse (11) unterteilt ist in zwei elementare Massen (11'), die jeweils zwischen den Enden dieser Torsionswelle (24) und den entsprechenden freien Enden der Arme (19, 20) eingefügt sind.

4. Mechanismus nach einem der Ansprüche 1 bis 3,
**dadurch gekennzeichnet, dass** jeder einen einstückigen Bogen bildende Hebel (5) eine Gesamtballastmasse (6) aufweist, die die Torsionswelle (24), die erste Masse (10) und die jeweiligen beiden Elementarmassen (11') umfasst.

5. Mechanismus nach einem der Ansprüche 1 bis 4,
**dadurch gekennzeichnet, dass** die Einfügungsmittel ein Paar von Befestigungsorganen (16, 18) zur jeweiligen Befestigung am ersten Aufbau (1) und am zweiten Aufbau (2) aufweisen, wobei jeder einen einstückigen Bogen bildende Hebel (5) angeordnet ist zwischen und angelenkt ist an diesen Paaren von Befestigungsorganen (16, 18), wobei jedes Paar von Befestigungsorganen aufweist: einen Längsträger (16) zur Befestigung an dem ersten Aufbau (1) und eine Platte (18) zur Integration in eine Tragekonstruktion (14) des Aufbaus (12).

6. Mechanismus nach einem der Ansprüche 1 bis 4,
**dadurch gekennzeichnet, dass** das Schwenklager (23) jedes Hebelarms (5), der dem ersten Aufbau (1) zugeordnet ist, an der Spitze seines Verankerungsendes (8) angeordnet ist, und **dadurch**, dass das Schwenklager (22) des Hebelarms (5), der dem zweiten Aufbau (2) zugeordnet ist, zwischen seinen entgegengesetzten Enden angeordnet ist.

7. Mechanismus nach Anspruch 5 oder 6,
**dadurch gekennzeichnet, dass** die Längsträger (16) jeweils ein offenes Lager (26) zur Aufnahme der entsprechenden Platte (18) aufweisen.

8. Mechanismus nach Anspruch 7,
**dadurch gekennzeichnet, dass** jeder der Arme (19, 20) brückenförmig ausgebildet ist, deren Klauen (27, 28) auf der entsprechenden einen und anderen Seite des Längsträgers (16) angeordnet sind, und **dadurch**, dass die Platten (18) jeweils ein Fenster (29) aufweisen für den Durchgang in Querrichtung des Trägers (21) und der Torsionswelle (24).

9. Mechanismus nach einem der Ansprüche 1 bis 8,
**dadurch gekennzeichnet, dass** die ersten Massen (10), die jeweils die Torsionswellen (24) eines jeden Filterorgans des Paares umfassen, miteinander über ein Verbindungsorgan (25) verbunden sind, und **dadurch**, dass die Einfügungsmittel (16, 18), mit denen die entgegengesetzt zueinander angeordneten Filterorgane versehen sind, ihnen gemeinsam sind.

**10.** Sitz (12), der eine Ausrüstung bildet, die mit mindestens einem Mechanismus nach einem der Ansprüche 1 bis 9 versehen ist,
**dadurch gekennzeichnet, dass** der Sitz (12) Stützträger (15) aufweist, die einen Schalensitz (13) tragen und die jeweils eine Platte (18) umfassen, die Teil der Einfügungsmittel ist, wobei die Platten (18) mit einem Längsträger (16) verbunden sind, der ebenfalls Teil der Einfügungsmittel ist, wobei dieser Längsträger (16) jeweils zur Befestigung des Sitzes (18) am Boden (1) über mindestens zwei einstückig bogenförmig ausgeformte Hebel (5) dient, die jeweils gemeinsam an einer der Platten (18) und einem der Längsträger (16) angelenkt sind.

**11.** Sitz (12) nach Anspruch 10,
**dadurch gekennzeichnet, dass** er eine Sitzschale aufweist, und der Schwenkbereich eines jeden einen einstückigen Bogen bildenden Hebels (5) zwischen zwei Anschlagsstellungen begrenzt ist, die entsprechend einem Grenzwert einer Belastung ausgewählt sind, der der Sitz (12) ausgesetzt ist, wobei ausgehend von diesem Schwellenwert eine Mechanismus zum Lösen der Sitzschale (13) ausgelöst wird.

**12.** Sitz nach Anspruch 11,
**dadurch gekennzeichnet, dass** der Schwenkbereich eines jeden Hebelarms (5), der einen einstückigen Bogen bildet, zwischen der Innenfläche eines offenen Lagers (26), das die Längsträger (16) aufweisen, und der Innenfläche gegenüber einem offenen Fenster (29), welches die Platten (18) aufweisen, gegen deren Flächen jeder einen einstückigen Bogen bildende Hebel (5) jeweils im Anschlag unter Zwischenschaltung des Verbindungsträgers (21) angeordnet ist, begrenzt ist.

Z

Y ⊗ → X

3

2

Lmp

6

11

L

10

Ht

A2    A1

5

7

8

9

Lt    Lr

1

4

**fig.1**

z

y ⊗ → x

12

3

2

8

6

11

9

5    5

A1    7    10    7    A1

1    10    A2

4    9    11    6    1

A2    4

**fig.2**

EP 2 316 730 B1

fig.3

EP 2 316 730 B1

fig.4

17

**EP 2 316 730 B1**

**RÉFÉRENCES CITÉES DANS LA DESCRIPTION**

**Documents brevets cités dans la description**

- FR 2863966
- EP 1719700 A
- US 4311213 A
- US 4088042 A